# EUROPÄISCHE PATENTANMELDUNG

(11) **EP 0 731 322 A2**
(43) Veröffentlichungstag der Anmeldung: **11.09.1996**
(21) Anmeldenummer: 96103517.7
(22) Anmeldetag: 07.03.1996
(51) Int. Cl.: F24H 8/00, F24D 19/10

(54) **Brennwertheizkessel**

(30) Priorität: 10.03.1995 DE 29504158 U; 29.08.1995 DE 29513818 U
(71) Anmelder: VIESSMANN WERKE GmbH & CO., D-35107 Allendorf/Eder (DE)
(72) Erfinder: Strauss, Rolf Peter, Dr.-Ing., 35066 Frankenberg/Eder (DE)
(74) Vertreter: Wolf, Günter, Dipl.-Ing.

(57) **Zusammenfassung**

Die Erfindung betrifft einen Brennwertheizkessel mit Umwälzpumpe (8) und kleinvolumigem Abgaswärmetauscher (1), wobei zwischen Vor- und Rücklaufanschlüssen (2, 3) des Heizkessels eine mit Mindestmengendrossel (5) versehene Bypassleitung (4) angeordnet ist. Zur Lösung der Aufgabe, einerseits den Abgaswärmetauscher mit einem Mindestwassermengenstrom versorgen zu müssen, andererseits aber dadurch die Brennwertnutzung des Heizkessels nicht bzw. nicht wesentlich zu beeinträchtigen, ist dieser erfindungsgemäß derart ausgestaltet, daß der kleinvolumige Abgaswärmetauscher (1) hydraulisch zweigeteilt ausgebildet ist, dessen in bezug auf die Abgasführung (6) vorgeschalteter, brennernaher Teil (1') zum Vorlaufanschluß (2) führt und dessen nachgeschalteter, brennerferner Teil (1'') den Rücklaufanschluß (3) aufweist und beide Teile 1', 1'') mit ihren anderen Enden (E', E'') miteinander hydraulisch verbunden sind und daß die gedrosselte oder drosselbare Bypassleitung (4) einerseits vorlaufseitig hinter der Umwälzpumpe (8) des Heizkessels angeschlossen und andererseits den abgezweigten Vorlauf in den vorgeschalteten Teil (1') leitend mit diesem verbunden ist.

## Beschreibung

Die Erfindung betrifft einen Brennwertheizkessel mit Umwälzpumpe und kleinvolumigem Abgaswärmetauscher, wobei zwischen Vor- und Rücklaufanschlüssen des Heizkessels eine mit Mindestmengendrossel versehene Bypassleitung angeordnet ist.

Brennwertheizkessel dieser Art sind hinlänglich bekannt und in Benutzung, so daß es diesbezüglich keines besonderen druckschriftlichen Nachweises bedarf. Ein optimaler Brennwertbetrieb ist dann gewährleistet, wenn der Rücklauf mit ausreichend tiefer Temperatur in den Heizkessel zurückgeleitet wird. Sofern in der Abgasführung des Brennwertheizkessels ein kleinvolumiger Abgaswärmetauscher angeordnet ist, wovon hier ausgegangen wird, so muß dafür gesorgt werden, daß dieser mit einem Mindestwassermengenstrom versorgt wird, um ein Sieden im Abgaswärmetauscher zu vermeiden. Dies ist insbesondere bei Heizungsbetrieb der Fall, wenn aufgrund bedarfsangepaßtem geringen Wassermengenstroms dieser nicht ausreicht, um im Abgaswärmetauscher ein Sieden zu verhindern. Dieses Problem ist einfach durch die Anordnung einer Bypassleitung gelöst, deren Mindestmengendrossel bei kleinem Heizungswasser-Massestrom öffnet, so daß ein Teil des Vorlaufes direkt wieder in den Heizkessel bzw. den Abgaswärmetauscher zurückgeleitet wird. Auf der Hand liegend wirkt sich dies negativ auf die Brennwertnutzung aus, da dadurch die Rücklauftemperatur angehoben wird.

Diesem Nachteil soll abgeholfen werden, d.h., der Erfindung liegt die Aufgabe zugrunde, einen kleinvolumigen Abgaswärmetauscher dahingehend zu verbessern, daß durch die Notwendigkeit, den Abgaswärmetauscher mit einem Mindest-Wassermengenstrom zu versorgen, die Brennwertnutzung nicht bzw. nicht wesentlich beeinträchtigt wird.

Diese Aufgabe ist mit einem Brennwertheizkessel der gattungsgemäßen Art nach der Erfindung dadurch gelöst, daß der kleinvolumige Abgaswärmetauscher hydraulisch zweigeteilt ausgebildet ist, dessen in bezug auf die Abgasführung vorgeschalteter, brennernaher Teil zum Vorlaufanschluß führt und dessen nachgeschalteter, brennerferner Teil den Rücklaufanschluß aufweist und beide Teile mit ihren anderen Enden miteinander hydraulisch verbunden sind und daß die gedrosselte oder drosselbare Bypassleitung einerseits vorlaufseitig hinter der Umwälzpumpe des Heizkessels angeschlossen und andererseits den abgezweigten Vorlauf in den vorgeschalteten Teil leitend mit diesem verbunden ist.

Durch diese Ausbildung bleibt also der in der Abgasführung nachgeschaltete zweite Teil des Abgaswärmetauschers vom direkt aus dem Vorlauf rückgeführten Vorlaufwasser unbeeinträchtigt und sorgt in seinem Bereich für eine im Sinne des Brennwertbetriebes ausreichende Abkühlung der Abgase. Dies gilt auch dann, wenn der Abgaswärmetauscher als Wärmelieferquelle für einen daran angeschlossenen Brauchwasserkreis dient, zumal dieser in bezug auf den Heizungskreis in der Regel immer auf Vorrang geschaltet ist und dessen Rücklauf hinsichtlich seiner Temperatur in der Regel immer niedriger liegt als die Heizungsrücklauftemperatur. Letztlich muß aber auch hierbei und bei geringem Wassermengenstrom dafür gesorgt werden, daß im Abgaswärmetauscher kein Sieden auftritt.

Vorteilhaft wird die normalerweise als von Hand einstellbare Umwälzpumpe in Form einer drehzahlregelbaren Umwälzpumpe vorgesehen, was bei Teillastbetrieb zu einer sehr niedrigen Leistungsaufnahme der Pumpe führt.

Die erfindungsgemäße Ausbildung führt grundsätzlich zu einer verbesserten Brennwertnutzung. Zwischen Vor- und Rücklauf ist eine große Temperaturspreizung möglich, die insbesondere bei Brauchwasserbereitung in Interesse ist, d.h., die Vorlauftemperatur kann einen konstant hohen Wert haben, ohne daß dadurch die Brennwertnutzung verschlechtert wird.

Im übrigen ist unter Abgaswärmetauscher auch ein wasserführendes, kleinvolumiges Gehäuse eines Brennwertheizkessels zu verstehen, sofern dieses zweigeteilt ist und die beiden wasserführenden Räume sinngemäß wie ein in der Abgasströmung angeordneter Nachschaltwärmetauscher geschaltet sind.

Praktische Ausführungsformen bestehen zum einen darin, daß die Bypassleitung in den hydraulischen Verbindungsteil zwischen den beiden Teilen einmündend angeordnet ist und zum anderen, daß die abgezweigte Bypassleitung in den ersten Teil des Abgaswärmetauschers zurückgeführt ist, sich durch diesen erstreckt und offen in diesem vor dessen Verbindung zum zweiten Tauscherteil endet. Letztere Ausführungsform wird bevorzugt, da die Bypassleitung der ersten Ausführungsform einer zweifachen Anbindung bedarf, nämlich einmal am Vorlauf und einmal an der Verbindung zwischen den beiden Tauscherteilen, während bei der zweiten Ausführungsform ein Anschluß nur hinter der Umwälzpumpe erforderlich ist.

Auch für die Mindestmengendrossel sind zwei Ausführungsformen vorgesehen, nämlich einmal in Form eines Mindestmengenreglers und einmal derart, daß die Mindestmengendrossel als Querschnittsverengung in Form einer einfachen Quetschstelle der Bypassleitung ausgebildet ist, was aus Kostengründen bevorzugt wird, denn dadurch wird ein relativ aufwendiger Mindestmengenregler entbehrlich, und es fällt auch dessen sonst erforderliche Einbindung in die Bypassleitung weg, der lediglich durch eine an der für den ersten Tauscherteil orientierte und rechenbare, ein Sieden verhindernde Querschnittsverengung der Bypassleitung ersetzt ist.

Der erfindungsgemäße Brennwertheizkessel wird nachfolgend anhand der zeichnerischen Darstellung von Ausführungsbeispielen näher erläutert.

Es zeigt stark schematisiert
- Fig. 1: das hydraulische Schaltschema eines Brennwertheizkessels mit angeschlossenem Heizungskreis;
- Fig. 2: das hydraulische Schaltschema eines Brennwertheizkessels gemäß Fig. 1, aber mit Brauchwasserbereitung;
- Fig. 3: entsprechend Fig. 1 das Schaltschema eines Brennwertheizkessels in bevorzugter Ausführungsform;
- Fig. 4: ein praktisches Ausführungsbeispiel zum Schaltschema gemäß Fig. 3;
- Fig.5A, B: stark vergrößert Ausführungsformen der Mindestmengendrossel in der Bypassleitung und in bevorzugter Ausführungsform und
- Fig. 6: zum Vergleich die bisher übliche Schaltung von Brennwertheizkesseln der eingangs genannten Art.

Der mit Umwälzpumpe 8 versehene Heizkessel besteht, wie bisher auch und unter Bezug auf die Vergleichsfigur 6, aus einem Abgaswärmetauscher 1, zwischen dessen Vor- und Rücklaufanschlüssen 2, 3 aus den genannten Gründen eine mit Mindestmengendrossel 5 versehene Bypassleitung 4 angeordnet ist. Der Rücklauf passiert dabei also immer die gesamte Wärmetauschfläche F des Abgaswärmetauschers 1. Via Bypassleitung 4 und Mindestmengendrossel 5 dem Rücklaufanschluß 3 zugeführter Vorlauf sorgt also für einen ein Sieden verhindernden Massestrom, was aber auf Kosten der Brennwertnutzung geht.

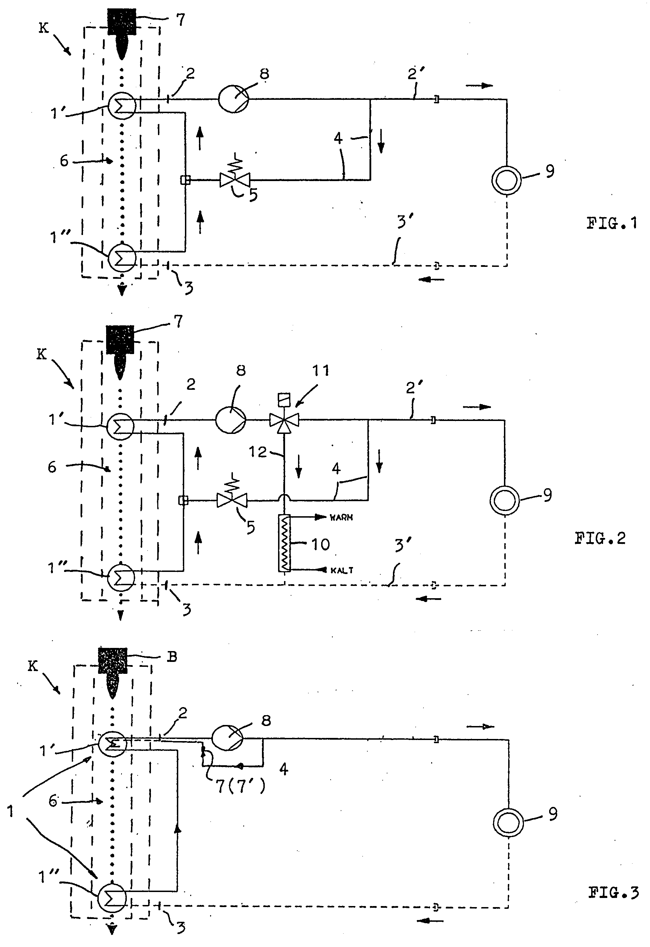

Demgegenüber und unter Bezug auf Fig. 1, 2 ist der Abgaswärmetauscher 1 hydraulisch zweigeteilt ausgebildet und die Bypassleitung 4 einerseits am Vorlaufanschluß 2 und andererseits zwischen den beiden Teilen 1', 1'' des Abgaswärmetauschers 1 einmündend angeordnet. Der Rücklaufanschluß 5 ist dabei durch den in der Abgasführung 6 dem ersten Teil 1' nachgeschalteten zweiten Teil 1'' des Abgaswärmetauschers 1 mit dessen ersten Teil 1' verbunden. Der Kessel K mit Brenner 7 und die Abgasführung 6 sind in den Fig. 1 bis 3 und 6 nur gestrichelt angedeutet.

Die Heizung ist mit 9 und mit 10 (Fig. 2) ist ein Brauchwasserspeicher bzw. brauchwassererwärmer bezeichnet.

Von einer Vorlaufabzweigung und Rückführung bleibt also der in der Abgasführung 6 nachgeschaltete Teil 1'' unberührt, der nur den relativ kalten Rücklauf aus der Heizung 9 (Fig. 1) und/oder dem Brauchwassererwärmer 10 erhält (Fig. 2), der in einem von einem Dreiwegeventil 11 ausgehenden Leitungsstrang 12 zwischen den Vor- und Rücklaufsträngen 2', 3' angeordnet ist.

Soll der Heizkessel K nur der Brauchwassererwärmung dienen, so fallen das Dreiwegeventil 11 und die zur Heizung 9 führenden Vor- und Rücklaufstränge 2', 3' weg.

Im Unterschied zur vorbeschriebenen Ausführungsform ist unter Verweis auf Fig. 3 bis 5 für die bevorzugte wesentlich, daß die vom Vorlauf 2 abgezweigte Bypassleitung 4 in den ersten Teil 1' des Abgaswärmetauschers 1 zurückgeführt ist, sich durch diesen erstreckt und offen in diesem vor dessen Übergang in den zweiten Tauscherteil 1'' endet. Die Bypassleitung 4 ist also nur am Vorlauf 2, wie dargestellt, anzuschließen und in den ersten Tauscherteil 1' einzuführen, wo sie einfach offen endet, und zwar vor dessen Übergang bzw. dessen Anschluß mit dem zweiten Tauscherteil 1''.

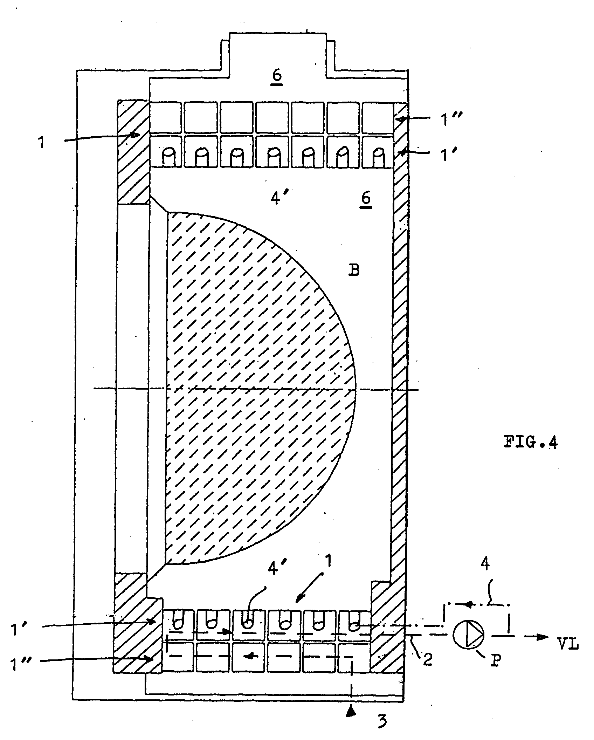

Fig. 4 stellt ein praktisches Ausführungsbeispiel dar, das insofern keiner zusätzlichen Erläuterung bedarf, da entsprechende Elemente mit entsprechenden Bezugszeichen versehen sind. Das die Bypassleitung 4 bildende Röhrchen 4' ist entsprechend der Wendelform des ersten Teiles 1' des Abgaswärmetauschers gewendelt und kann somit, da es anschlußfrei offen endet, in diesen Tauscherteil 1' gewissermaßen eingeschraubt werden, um dafür zu sorgen, daß der durch die Bypassleitung 4 abgezweigte Vorlauf des Wärmeträgermediums die ganze Fläche des ersten Teiles 1' bis zum Vorlaufanschluß passiert.

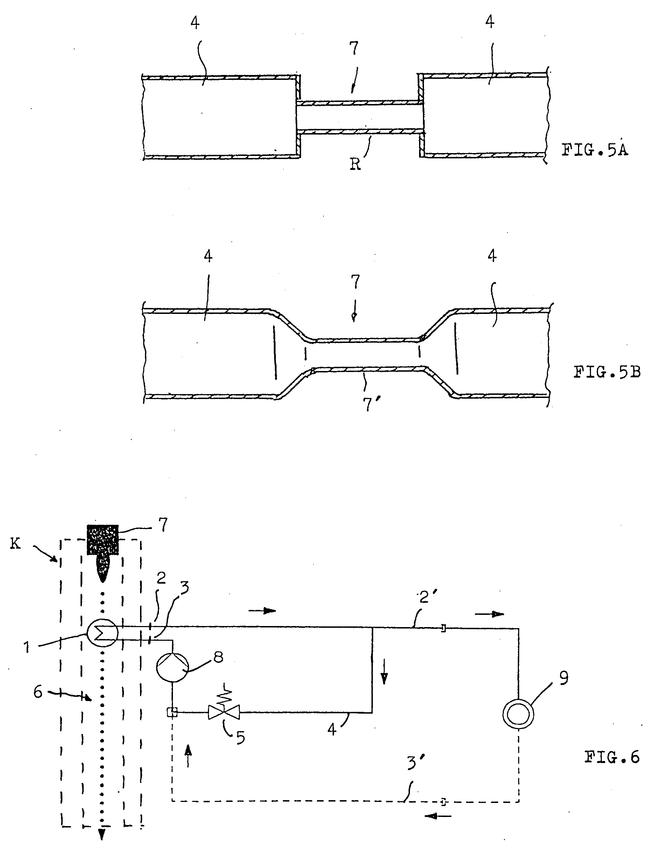

Statt eines kostenaufwendigen Mindestmengenreglers als Drossel wird in beiden Fällen bevorzugt, da wesentlich günstiger, die Bypassleitung 4 zur Ausbildung einer solchen Mindestmengendrossel herangezogen, d.h., die Querschnittsverengung 7 der Bypassleitung 4 ist gemäß Fig. 5A entweder durch ein integriertes, durchmesserreduziertes Röhrchen R oder durch eine Quetschstelle 7' an der Bypassleitung 4 (siehe Fig. 5B) gebildet.

## Patentansprüche

1. Brennwertheizkessel mit Umwälzpumpe (8) und kleinvolumigem Abgaswärmetauscher (1), wobei zwischen Vor- und Rücklaufanschlüssen (2, 3) des Heizkessels eine mit Mindestmengendrossel (5) versehene Bypassleitung (4) angeordnet ist,
**dadurch gekennzeichnet,**
daß der kleinvolumige Abgaswärmetauscher (1) hydraulisch zweigeteilt ausgebildet ist, dessen in bezug auf die Abgasführung (6) vorgeschalteter, brennernaher Teil (1') zum Vorlaufanschluß (2) führt und dessen nachgeschalteter, brennerferner Teil (1'') den Rücklaufanschluß (3) aufweist und beide Teile (1', 1'') mit ihren anderen Enden (E', E'') miteinander hydraulisch verbunden sind und daß die gedrosselte oder drosselbare Bypassleitung (4) einerseits vorlaufseitig hinter der Umwälzpumpe (8) des Heizkessels angeschlossen und andererseits den abgezweigten Vorlauf in den vorgeschalteten Teil (1') leitend mit diesem verbunden ist.

2. Brennwertheizkessel nach Anspruch 1,
**dadurch gekennzeichnet,**
daß die Bypassleitung (4) in den hydraulischen Verbindungsteil (V) zwischen den beiden Teilen (1', 1'') einmündend angeordnet ist.

3. Brennwertheizkessel nach Anspruch 1,
**dadurch gekennzeichnet,**
daß die abgezweigte Bypassleitung (4) in den ersten Teil (1') des Abgaswärmetauschers (1) zurückgeführt ist, sich durch diesen erstreckt und offen in diesem vor dessen Verbindung zum zweiten Tauscherteil (1'') endet.

4. Brennwertheizkessel nach einem der Ansprüche 1 bis 3,
**dadurch gekennzeichnet,**
daß die Mindestmengendrossel (5) in Form eines Mindestmengenreglers ausgebildet ist.

5. Brennwertheizkessel nach einem der Ansprüche 1 bis 3,
**dadurch gekennzeichnet,**
daß die Mindestmengendrossel (5) als Querschnittsverengung (7) im Zuge der Bypassleitung (4) ausgebildet ist.

6. Brennwertheizkessel nach Anspruch 5,
**dadurch gekennzeichnet,**
daß die Querschnittsverengung (7) in Form einer Quetschstelle (7') der Bypassleitung (4) ausgebildet ist.
